# EUROPEAN PATENT APPLICATION

(11) **EP 1 699 241 A1**
(43) Date of publication of application: **06.09.2006**
(21) Application number: 05026031.4
(22) Date of filing: 29.11.2005
(51) Int. Cl.: H04N 7/173

(54) **Method for providing information about multimedia contents in a multimedia service system**

(30) Priority: 02.03.2005 KR 2005017445
(71) Applicant: Samsung Electronics Co., Ltd., Yeongtong-gu Suwon-si, Gyeonggi-do (KR)
(72) Inventor: Choi, Jong-Hyuk, Yeongtong-gu Suwon-si Gyeonggi-do (KR); Park, Ji-Ho, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a method for providing information about multimedia contents in a multimedia service system. If a mobile communication terminal receives a request for content information from a user while reproducing received multimedia data according to a VOD service, the mobile communication terminal provides information related to a content request time to a content information providing server. Alternatively, if the mobile communication terminal receives a request for content information from a user while reproducing the received multimedia data according to a VOD service, the mobile communication terminal may provide the content information providing server with frame information of the content information request time. Accordingly, the content information providing server searches a content information database with reference to the frame information or the content information request time. Then, the content information providing server transmits several pieces of information searched according to the corresponding content information request time to the terminal.

## Description

The present invention relates to a video-on-demand (VOD) streaming service, and more particularly to an apparatus and a method enabling a user to obtain desired information while receiving a VOD streaming service.

A streaming technique denotes a technique of transmitting/receiving multimedia data including Audio/Video data in real time over the Internet rather than downloading the multimedia data. According to the streaming technique, information to be processed is partially and continuously received per a packet units (for example, 0.5Mb) instead of downloading and processing all information at a time. A mobile communication terminal can receive a video on demand (VOD) service based on such a streaming technique. A user can view a film or motion picture by using such a mobile communication terminal receiving the VOD service.

VOD service has gradually increased in its number of users. Accordingly, there have been suggested several techniques for providing information in relation to VOD contents. To this end, conventionally, the VOD contents are provided with information about moving pictures. In the case of Motion Pictures Expert Group (MPEG)-4, information is included in the video stream through a segmentation scheme or the like. Such information is analyzed by a player or coder/decoder (CODEC).

In the case of a synchronized multimedia integration language (SMIL), a VOD content provider inserts information to be provided into the video stream by using an authoring tool through an SMIL scheme according to a predetermined scenario. In addition, a player analyzes the information which can be obtained from the contents.

In order to provide certain information in a moving picture, the conventional technique must insert the information into the contents when the contents are made. Accordingly, all information about a moving picture must be determined and processed according to the contents when the contents are made.

In addition, a high-performance player is required in order to analyze such information about the moving picture. Practically, although the information expression in a moving picture by using MPEG-4 and functions of user's input corresponding to the information expression are determined as a standard (specification), these functions have not yet been properly realized even in a PC. In addition, it is more difficult to realize these functions in a portable terminal. In other words, the conventional technique expresses the information in a moving picture, thereby increasing the amount of moving picture data and allowing a user to receive only limited information, which has been previously stored.

Accordingly, the present invention has been made to solve the above-mentioned problems occurring in the prior art.

It is the object of the present invention to provide an apparatus and a method capable of easily obtaining information about a corresponding moving picture (information about a person, goods, a place, etc.) during a VOD contents streaming service in a mobile communication terminal.

This object is solved by the subject matter of the independent claims.

Preferred embodiments are defined in the dependent claims.

According to a preferred aspect of the present invention, there is provided a method for providing content information from a client to a user in a multimedia service system, the method including the steps of determining if the user requests the content information during a multimedia streaming service, transmitting information related to a content information request time to a content information providing server if the user requests the content information, and displaying the content information if the content information is received from the content information providing server.

Preferably, there is provided a method for providing content information from a content information providing server to a client in a multimedia service system, the method including the steps of storing the multimedia content information, receiving information related to a content information request time from the client, searching for content information according to the information related to the content information request time, and transmitting the searched content information to the client.

The present invention will be more apparent from the following detailed description taken in conjunction with the accompanying drawings, in which:
FIG. 1 is a block diagram illustrating the structure of a VOD service system for a typical mobile communication terminal;
FIG. 2 is a message flowchart for obtaining by a client content information in a VOD service system according to one embodiment of the present invention;
FIG. 3 is a block diagram illustrating the structure of a mobile communication terminal according to one embodiment of the present invention;
FIG. 4 is a flowchart illustrating a control procedure according to one embodiment of the present invention when a client receives a request for content information from the user; and
FIG. 5 is a flowchart illustrating a control procedure when the content information providing server receives the request for content information according to one embodiment of the present invention.

Hereinafter, a preferred embodiment of the present invention will be described in detail with reference to the accompanying drawings. The same or similar components in drawings are designated by the same reference numerals as far as possible although they are shown in different drawings. In the following description of the present invention, a detailed description of known functions and configurations incorporated herein will be omitted when it may make the subject matter of the present invention unclear.

The present invention proposes an apparatus and a method in which users can obtain information (regarding persons, goods, and places) included in a moving picture while receiving a moving picture streaming service through a mobile communication terminal.

To this end, if a mobile communication terminal according to the present invention receives a request for content information from a user while reproducing received multimedia data according to a VOD service, the mobile communication terminal provides information related to a content request time to a content information providing server. Selectively, the mobile communication terminal may provide the content information providing server with frame information of the content information request time.

Accordingly, the content information providing server searches a content information database with reference to the frame information or the content information request time. Then, the content information providing server transmits several pieces of information searched according to the corresponding content information request time to the terminal.

Accordingly, the user can instantly obtain desired information while viewing a moving picture and receive functions such as the ability to purchase goods based on the desired information. The content information provider updates information in real time by storing information in a server, so that fast and exact information can always be provided and used for advertisement in electronic commerce.

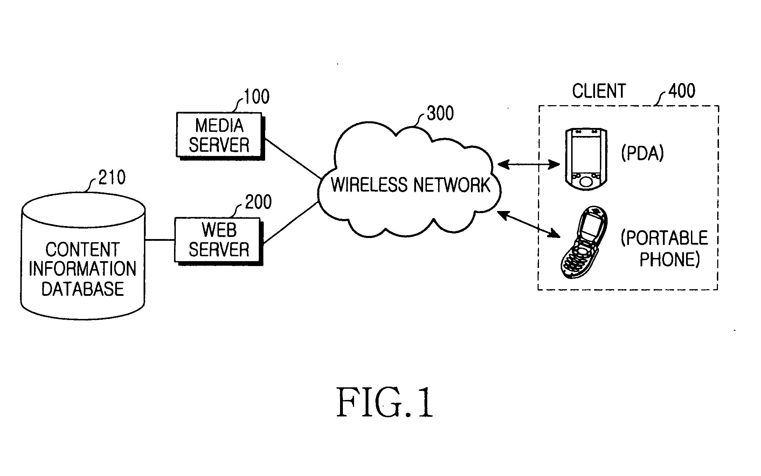

Hereinafter, the structure of a VOD service system according to the present invention will be described with reference to the block diagram of FIG. 1,
which illustrates the structure of the VOD service system for a typical mobile communication terminal. The VOD service system includes a client 400 receiving a VOD service. The client 400 processes a VOD function and a wireless Internet protocol such as the WAP or the HTTP. In addition, the client 400 may include a portable phone or a PDA device. The client 400 can request a VOD streaming service to a media server 100 through a wireless network 300. The media server 100 provides the VOD streaming service and stores various types of multimedia contents in the form of a database in order to provide the VOD streaming service. In addition, the client 400 accesses a web server 200 through the wireless network 300. The web server 200 includes a content information database 210 for storing information about VOD contents.

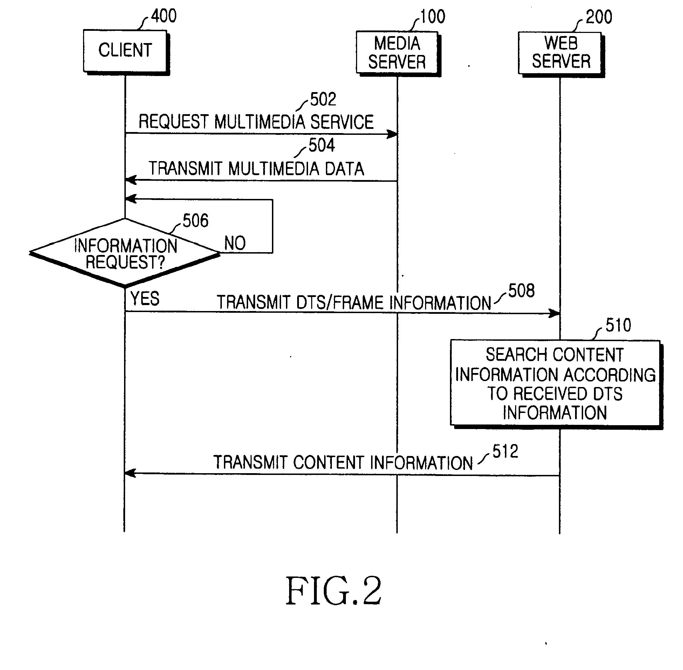

FIG. 2 is a message flowchart for obtaining by the client 400 content information in the VOD service system according to one embodiment of the present invention.

The client 400 sends a request for a multimedia service (e.g., VOD service) to a media server 100 according to user selection in step 502. Then, the media server 100 transmits multimedia data to the client 400 in step 504. In addition, while receiving and playing multimedia data, the client 400 monitors if the user requests content information in step 506. If the user requests content information, the client 400 determines a content information request time from the user. Selectively, the client 400 may determine a VOD contents frame at the content information request time from the user. If the user selects a predetermined point on a screen for displaying VOD contents, the client 400 determines coordinate information about the corresponding point. The content information request time may be expressed using a DTS (digital time stamp).

In step 508, the client 400 provides frame information or content information request time information to the web server 200 (i.e., content information providing server). Alternatively, the client 400 may provide the coordinate information about the point selected by the user on the screen to the web server 200.

The web server 200 searches the content information database based on frame information or the content information request time from the client 400 in step 510. The content information database 210 stores the DTS/frame information and content information (corresponding to the DTS/frame information) provided by a VOD content provider. Herein, the DTS/frame information is established by matching it with a specific interval. For example, the content information database 210 may be constructed in such a manner that content information is stored corresponding to predetermined intervals (e.g., DTS 1-DTS2). For example, the content information database 210 may have a structure such as [DTS1/Frame][DTS2/Frame][Information1], ... , [InformationN], [DTS2/Frame][DTS3/Frame][Information1], ..., [InformationN], ..., and [DTSM/Frame][DTSM+1/Frame][Information1], ..., [InformationN].

Accordingly, if the DTS/frame information transmitted from the client 400 belongs to certain DTS/Frame information interval preset in the content information database (if DTS1/Frame1 >=DTS! && DTS<= DTS2/Frame2), the web server 200 selects content information corresponding to the DTS/Frame information interval. At this time, if the web server 200 receives coordinate information about a predetermined point from the client 400, the web server 200 selects content information corresponding to the coordinate information from content information corresponding to the DTS/Frame information interval.

The content information may include any information about VOD contents. In addition, the content information may include information which a content provider intends to provide. The content information may be expressed in an HTTP document and include information about an URL address disclosing the content information. For example, if the VOD contents correspond to a drama, the content information includes the profile of a drama character, accessories worn by the character, information about a shooting location, sound track, and album information. In other words, data base information includes DTS/Frame information used as an index in a database and information regarding an HTTP document or an URL address in which content information is expressed.

In addition, the web server 200 transmits information extracted from the content information database to the client 400 in step 512. For example, the web server 200 may transmit information regarding an HTTP document or an URL address for content information. The content information providing server 200 transmits to the terminal several pieces of information searched according to corresponding content information request time information.

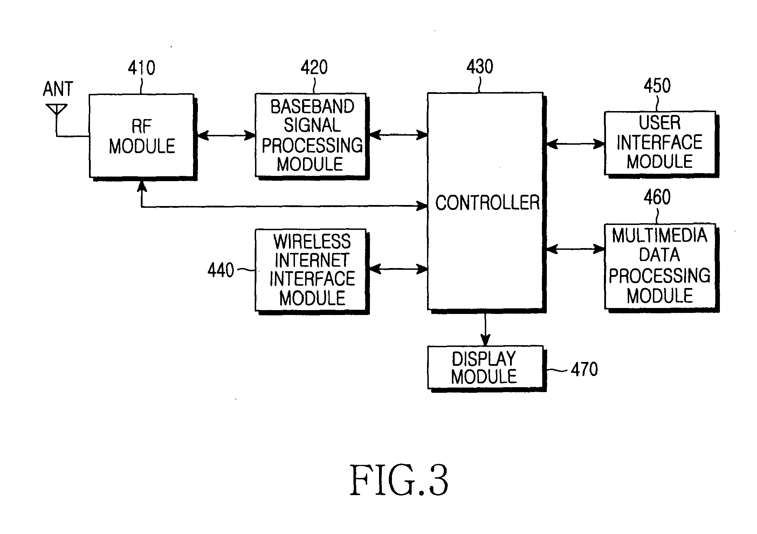

FIG. 3 is a block diagram illustrating the structure of the mobile communication terminal according to one embodiment of the present invention. The mobile communication terminal includes an RF module 410, a baseband signal processing module 420, a controller 430, a wireless Internet interface module 440, a user interface module 450, a multimedia data processing module 460, and a display module 470.

The RF module 410 transmits/receives an RF signal to/from a base station through an antenna (ANT). The RF module 410 converts a received signal into an intermediate frequency signal to be outputted to the baseband signal processing module 420. The RF module 410 also converts an IF signal input from the baseband signal processing module 420 into an RF signal to be transmitted. In addition, the baseband signal processing module 420 includes a baseband analog ASIC (BBA) providing interface between the controller 430 and the RF module 410. The baseband signal processing module 420 converts a baseband digital signal input from the controller 430 into an analog IF signal to be applied to the RF module 410. The baseband signal processing module 420 also converts an analog IF signal input from the RF module 410 into a baseband digital signal to be applied to the controller 430.

The controller 430 controls the operation of the mobile communication terminal. In addition, the controller 430 performs a content information requesting function from among VOD streaming services according to the present invention. In detail, the controller 430 receives VOD contents according to multimedia services from the media server 100 through the wireless Internet interface module 440 and displays the VOD content for a user through a multimedia data processing module 460. The wireless Internet interface module 440 supports a hypertext transfer protocol/transmission control protocol (HTTP/TCP) for obtaining content information from the web server 200, a real-time streaming protocol (RTSP) for controlling multimedia data, and a real-time transport protocol/RTP control protocol (RTP/RTPCP) for transmitting data.

In addition, the controller 430 monitors if the user requests content information in VOD streaming services. If the user has requested content information, the controller 430 determines a content information request time and the frame of VOD contents at the content information request time. In detail, the controller 430 recognizes frame information or a digital time stamp (DTS) for performing synchronization with respect to video, audio, and text data of the VOD contents to be output. Therefore, the controller 430 can recognize frame information or a DTS at a content information request time. In addition, if the user selects through the user interface module 450 a predetermined point on a screen used for displaying VOD contents, the controller 430 determines coordinate information about the corresponding point. The user interface module 450 has a variety of types of keys including numeral keys and provides key input data input by the user to the controller 430. Preferably, the user interface module 450 includes a touch screen. If there is a touch at a certain location on the touch screen, the user interface module 450 provides coordinate information about the touch point to the controller 430.

In addition, the controller 430 provides frame information or content information request time information to the web server 200 (i.e., content information providing server) through the HTTP/TCP protocol. Alternatively, the controller 430 may provide the coordinate information about the point selected by the user on the screen.

The display module 470 receives and displays display data corresponding to key input data input from the user interface module 450 under the control of the control module 430. In addition, the display module 470 displays the operation state of and plural pieces of information about the mobile communication terminal using icons and characters. In addition, the display module 470 displays data such as image data of VOD contents provided through the multimedia data processing module 460.

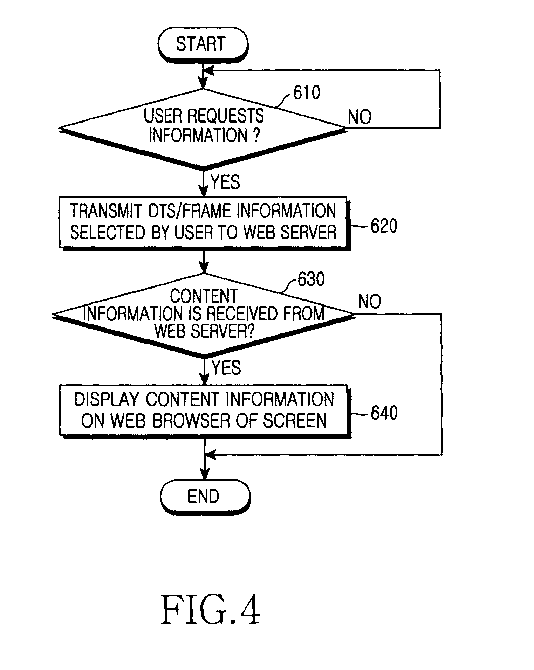

FIG. 4 is a flowchart illustrating a control procedure according to one embodiment of the present invention when the client receives the request for content information from the user.

The client 400 determines in step 610 if the user requests content information during the VOD streaming service. While a moving picture is being displayed, the user may want to obtain information about clothes or a necklace worn by the character, a location, sound track, etc., included in the moving picture. The user can select a player screen, for example, through an information acquisition button, etc., at a time where the user wants the information. This selection indicates that the user wants to obtain information about current sound track or a current scene.

If the client 400 receives a request for content information from the user, the client 400 determines a content information request time and a frame of VOD contents at the content information request time and transmits information about the content information request time (DTS) or frame information to the web server 200 in step 620.

Selectively, if the user selects a predetermined point on a screen used for displaying VOD contents, the client 400 determines coordinate information about the selected point and transmits the coordinate information to the web server 200.

Thereafter, the client 400 determines if content information is received from the web server 200 at step 630. If the client 400 receives the content information from the web server 200, the client 400 displays the content information on a web browser in step 640. Herein, since the content information can be usually expressed in an HTTP document as described above, the content information can be displayed on the web browser.

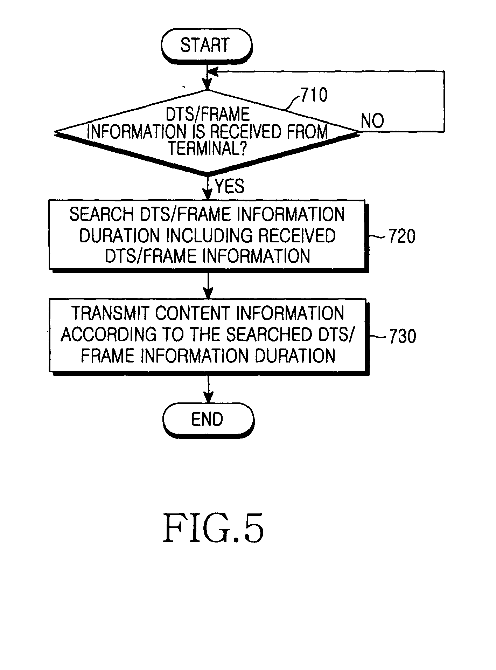

FIG. 5 is a flowchart illustrating a control procedure when the content information providing server receives the request for content information according to one embodiment of the present invention.

The web server 200 (content information providing server) determines if a DTS (a content information request time) or frame information is received from the client 400 in step 710. Alternatively, the web server 200 may receive coordinate information about a point selected by a user on a screen. Then, the web server 200 searches the content information database for predetermined DTS/Frame information interval (if DTS1/Frame 1 >=DTS ! && DTS <= DTS2/Frame2) including the received DTS information or the received frame information in step 720. In addition, the web server 200 transmits content information corresponding to the searched DTS/Frame information interval to a terminal in step 730.

As described above, a method according to the present invention can be realized through a program and stored on storage media (a CD-ROM, a RAM, a floppy disc, a hard disc, a magneto-optical disc drive, etc.) in a type which can be read by a computer.

As described above, according to the present invention, a user receiving a streaming service using a portable phone can view a moving picture through the portable phone and obtain desired information at a time where the user wants to obtain the desired information. The obtained information may be used for electronic commerce such as for a purchase of goods. In addition, a content provider can insert specific information into the moving picture, thereby enabling the provision of a service having superior quality. This can be used for electronic commerce according to the present invention, thereby helping new business to be created. In addition, it is easy to make contents, thereby reducing manufacturing costs. As a result, a user can easily obtain information included in a moving picture using a small amount of network resources and express information regardless of types of multimedia data such as audio, video, text, etc.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims.

## Claims

1. A method for providing content information from a client to a user in a multimedia service system, the method comprising the steps of:
determining if the user requests the content information during a multimedia streaming service;
transmitting information related to a content information request time to a content information providing server if the user requests the content information; and
displaying the content information if the content information is received from the content information providing server.

2. The method as claimed in claim 1, wherein the content information request time includes one of a digital time stamp information and frame information.

3. The method as claimed in claim 1 or 2, further comprising transmitting coordinate information about a predetermined point on a screen displaying the multimedia contents, which is selected by the user, if the user requests the content information to the content information providing server.

4. A method for providing multimedia content information from a content information providing server to a client in a multimedia service system, the method comprising the steps of:
storing the multimedia content information;
receiving information related to a content information request time from the client;
searching for content information according to the information related to the content information request time; and
transmitting the searched content information to the client.

5. The method as claimed in claim 4, wherein the content information request time includes one of a digital time stamp information and frame information at the content information request time.

6. The method as claimed in claim 5, wherein the step of storing the multimedia content information includes storing the content information corresponding to plural information intervals according to one of the digital time stamp information and the frame information of the multimedia contents.

7. The method as claimed in claim 6, wherein the step of searching for the content information includes a step of searching for content information corresponding to an information interval including the received digital time stamp information and the received frame information.

## Amended claims

### Amended claims in accordance with Rule 86(2) EPC.

**1.** A method for providing content information from a client to a user in a multimedia service system, the method comprising the steps of:
determining if the user requests the content information during a multimedia streaming service;
transmitting information related to a content information request time to a content information providing server if the user requests the content information; and
displaying the content information if the content information is received from the content information providing server.

**2.** The method as claimed in claim 1, wherein the content information request time includes one of a digital time stamp information and frame information.

**3.** The method as claimed in claim 1 or 2, further comprising transmitting coordinate information about a predetermined point on a screen displaying the multimedia contents, which is selected by the user, if the user requests the content information to the content information providing server.

**4.** A method for providing multimedia content information from a content information providing server to a client in a multimedia service system, the method comprising the steps of:
storing the multimedia content information;
receiving information related to a content information request time from the client;
searching for content information according to the information related to the content information request time; and
transmitting the searched content information to the client.

**5.** The method as claimed in claim 4, wherein the content information request time includes one of a digital time stamp information and frame information at the content information request time.

**6.** The method as claimed in claim 5, wherein the step of storing the multimedia content information includes storing the content information corresponding to plural information intervals according to one of the digital time stamp information and the frame information of the multimedia contents.

**7.** The method as claimed in claim 6, wherein the step of searching for the content information includes a step of searching for content information corresponding to an information interval including the received digital time stamp information and the received frame information.

**8.** A computer-readable recording medium readable by a machine, tangibly
embodying instructions executable by the machine to perform a method for providing content information from a client to a user in a multimedia service system, comprising:
determining if the user requests the content information during a multimedia streaming service;
transmitting information related to a content information request time to a content information providing server if the user requests the content information; and
displaying the content information if the content information is received from the content information providing server.

**9.** A computer-readable recording medium readable by a machine, tangibly
embodying instructions executable by the machine to perform a method for providing multimedia content information from a content information providing server to a client in a multimedia service system, comprising:
storing the multimedia content information;
receiving information related to a content information request time from the client;
searching for content information according to the information related to the content information request time; and
transmitting the searched content information to the client.
